# EUROPÄISCHE PATENTSCHRIFT

(11) **EP 2 691 227 B1**
(45) Veröffentlichungstag und Bekanntmachung des Hinweises auf die Patenterteilung: **16.08.2017**
(21) Anmeldenummer: 12709804.4
(22) Anmeldetag: 15.03.2012
(51) Int. Cl.: B29C 70/52, B29C 70/54, B29C 70/56, B29C 55/30

(54) **VERFAHREN UND VORRICHTUNG ZUR HERSTELLUNG EINES EINE VERSTÄRKUNG AUFWEISENDEN KUNSTSTOFFPROFILS**
METHOD AND APPARATUS FOR PRODUCING A PLASTIC PROFILE HAVING A REINFORCEMENT
PROCÉDÉ ET DISPOSITIF DE FABRICATION D'UN PROFILÉ EN MATIÈRE PLASTIQUE COMPRENANT UN ÉLÉMENT DE RENFORCEMENT

(30) Priorität: 30.03.2011 DE 102011015607
(43) Veröffentlichungstag der Anmeldung: 05.02.2014
(60) Teilanmeldung: 14001576.9
(73) Patentinhaber: Thomas GmbH + Co. Technik + Innovation KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2012/001159
(87) Internationale Veröffentlichungsnummer: WO 2012/130396

(56) Entgegenhaltungen:
- EP-A1- 1 547 753
- EP-A2- 0 747 204
- WO-A1-96/20824
- GB-A- 780 677
- US-A- 4 445 957
- US-A- 5 205 898
- US-A- 5 583 298
- US-A1- 2002 056 508
- US-A1- 2008 023 268

## Beschreibung

Die Erfindung betrifft ein Verfahren zur Herstellung eines eine Verstärkung aufweisenden Kunststoffprofils gemäß dem Oberbegriff des Anspruchs 1. Des Weiteren betrifft die Erfindung eine Vorrichtung zur Herstellung eines eine Verstärkung aufweisenden Kunststoffprofils gemäß dem Oberbegriff des Anspruchs 10.

Armierte Kunststoffprofile verfügen über eine durchgehende Verstärkung aus insbesondere Fasern, Geweben, Geflechten und/oder Gewirken, die im Kunststoff als Matrix eingebettet sind. Beim Kunststoff kann es sich um ein Duroplast, aber auch um ein Thermoplast handeln. Armierte bzw. verstärkte Kunststoffprofile werden überwiegend durchgehend, insbesondere kontinuierlich, in einem Strang hergestellt. Dieses geschieht bevorzugt im Strangpress- oder Pultrusionsverfahren. Dabei wird die Verstärkung durch eine Positioniereinrichtung gezogen und anschließend durch eine Form hindurchgeführt. In der Form werden die Verstärkung und der Kunststoff in das gewünschte Profil gebracht. Das die Form verlassende Kunststoffprofil wird von einer in Herstellungsrichtung auf die Form folgende Zieheinrichtung abgezogen. Dabei werden die Verstärkung durch die Positioniereinrichtung und der Kunststoff mit der darin eingebetteten Verstärkung durch die Form gezogen.

Bei der bisher bekannten Herstellung von verstärkten Kunststoffprofilen ist vor allem das positionsgenaue Einbringen einer nicht-unidirektionaler Verstärkung in den Kunststoff problematisch. Wie beispielsweise in dem Dokument GB 780 677 A beschrieben. Das Dokument GB 780677 A offenbart ein Verfahren gemäß dem Oberbegriff des Anspruchs 1 und eine Vorrichtung dem Oberbegriff des Anspruchs 10. Die von der Zieheinrichtung auf die Verstärkung einwirkenden Zugkräfte führen zu Verzerrungen der nicht-unidirektionalen Verstärkung, wie insbesondere Geweben, Vliesen und Geflechte. Das führt dazu, dass die Verstärkung nicht die gewünschte Positionierung im herzustellenden Kunststoffprofil aufweist. Das gilt insbesondere bei einer Verstärkung mit einem großen Faservolumen.

Außerdem sind bisher verstärkte Kunststoffprofile mit einem ungeradlinigen, insbesondere bogenförmigen, Verlauf nur mit speziell an den Verlauf des herzustellenden verstärkten Kunststoffprofils angepassten Formen möglich.

Der Erfindung liegt nun die Aufgabe zugrunde, ein Verfahren und eine Vorrichtung zu schaffen, womit die Verstärkung exakt im herzustellenden Kunststoffprofil einbettbar ist und/oder mit einer universellen Form verstärkte Kunststoffprofile mit verschiedenen Verläufen herstellbar sind.

Ein Verfahren zur Lösung mindestens eines Teilaspekts der Aufgabe weist die Maßnahmen des Anspruchs 1 auf. Demnach wird die Verstärkung durch mindestens zwei in Herstellungsrichtung gesehen vor der Form aufeinanderfolgend angeordnete, separate Positioniermittel hindurchgezogen, wobei mindestens ein Positioniermittel relativbeweglich zu wenigstens einem anderen Positioniermittel ist. Vorzugsweise sind alle voneinander getrennten Positioniermittel relativ zueinander beweglich. Durch die Relativbeweglichkeit mindestens eines Positioniermittels wird vorzugsweise die Verstärkung beim Hindurchziehen durch die Positioniermittel phasen- und/oder abschnittsweise gestaucht und somit nicht ständig einer Zugbelastung ausgesetzt. Hierdurch kommt es zu einem schlangenartigen Hindurchbewegen der Verstärkung durch die Positioniermittel, was eine momentane bereichsweise Entlastung der Verstärkung zur Folge hat. Verformungen oder Verzerrungen der Verstärkung werden dadurch vermieden oder zumindest reduziert, was ein kontrolliertes Einbringen der Verstärkung in den Kunststoff zur Folge hat. Es kann so ein verstärktes Kunststoffprofil mit exakt auf den Querschnitt verteilter und genau im Querschnitt positionierter Verstärkung geschaffen werden.

Bevorzugt ist vorgesehen, den Abstand zwischen mindestens zwei in Herstellungsrichtung aufeinanderfolgenden Positioniermitteln periodisch zu verändern. Insbesondere kann das geschehen, indem das mindestens eine Positioniermittel in gewissen Zeitabschnitten in Herstellungsrichtung und gegen die Herstellungsrichtung abwechselnd hin- und herbewegbar ist. Dadurch wird abwechselnd auf gegenüberliegenden Seiten des periodisch bewegten Positioniermittels die Zugbelastung der Verstärkung zeitweise aufgehoben. Vorzugsweise kommt es sogar zu einer kurzzeitigen Stauchung der Verstärkung erst auf der einen Seite und dann auf der anderen Seite des periodisch bewegten Positioniermittels. Dadurch werden Verzerrungen der Verstärkung insbesondere quer zur Herstellungsrichtung des Kunststoffprofils vermieden oder abgebaut. Besonders vorteilhaft ist es, wenn in regelmäßigen Zeitabständen alle Positioniermittel vorzugsweise phasenversetzt periodisch hin- und herbewegt werden. Dann werden im Bereich der Positioniermittel abwechselnd verschiedene Abschnitte der Verstärkung zumindest entlastet, vorzugsweise sogar kurzzeitig gestaucht.

Bei einer bevorzugten Ausgestaltung des Verfahrens ist es vorgesehen, die Verstärkung stramm zu halten. Das kann geschehen durch Festhalten der Verstärkung vor dem ersten Positioniermittel, beispielsweise durch gebremstes Abwickeln der Verstärkung von einer Vorratsrolle und durch Festhalten des hergestellten verstärkten Kunststoffprofils von der Zieheinrichtung. Durch das Strammhalten der Verstärkungen wird erreicht, dass beim Zurückbewegen mindestens eines Positioniermittels gegen die Herstellungsrichtung die Verstärkung oder auch das gesamte Kunststoffprofil nicht durch die Form oder Zieheinrichtung gegen die Herstellungsrichtung zurückgezogen werden. Außerdem führt das Strammhalten der Verstärkung dazu, dass beim periodischen Zurückbewegen mindestens eines Positioniermittels gegen die Herstellungsrichtung die Zugspannung im vor dem sich zurückbewegenden Positioniermittel liegenden Abschnitt der Verstärkung abgebaut werden kann oder gegebenenfalls die Verstärkung geringfügig gestaucht werden kann.

Gemäß einer anderen vorteilhaften Ausgestaltung des Verfahrens wird der verstärkte Kunststoffstrang in der Zieheinrichtung gekühlt. Das lässt es auch zu, mit dem Verfahren verstärkte Kunststoffprofile aus einem thermoplastischen Kunststoff herzustellen, weil dann das noch nicht völlig ausgehärtete Kunststoffprofil die Form verlassen kann, ohne dass die Gefahr des Anhaftens der Mantelfläche des Kunststoffprofils an den formgebenden Flächen der Form besteht.

Besonders vorteilhaft ist es, das die Form verlassende, verstärkte Kunststoffprofil in der Zieheinrichtung radial zusammenzupressen. Die Zieheinrichtung kann dann zum endgültigen Verformen des Kunststoffprofils dienen, wobei vorzugsweise dieses endgültige Formen oder auch Kalibrieren des Kunststoffprofils beim Abkühlen desselben geschieht und dadurch die Mantelfläche des Kunststoffprofils nicht an den sie berührenden Flächen der Zieheinrichtung anhaften kann.

Insbesondere kann die Zieheinrichtung so ausgebildet oder weitergebildet sein, dass sie sich vom Umfang des fertigen, insbesondere gekühlten, Kunststoffprofils lösen lässt. Beispielsweise kann das durch eine mehrteilige Ausbildung der Zieheinrichtung geschehen, wobei die einzelnen Teile der Zieheinrichtung auseinanderfahrbar sind und so praktisch das fertige Kunststoffprofil entformen. Umgekehrt kann beim Zusammenfahren der einzelnen Teile der Zieheinrichtung das Kunststoffprofil gepresst werden und dadurch exakt den vorgesehenen Querschnitt erhalten. Es findet beim Pressen des Kunststoffprofils in der Zieheinrichtung so quasi ein Kalibrieren des Kunststoffprofils statt, und zwar vorzugsweise vor dem vollständigen Aushärten des Kunststoffprofils.

Nach einer vorteilhaften Weiterbildung des Verfahrens ist vorgesehen, nicht nur mindestens ein Positioniermittel periodisch hin- und herzubewegen, sondern auch die Form, eine Tränkeeinheit und/oder die Zieheinrichtung. Dabei kann die Form einteilig sein, aber auch aufgeteilt sein in eine Heizeinrichtung, einen Gelzonenbereich und einen Endreaktionsbereich.

Vorzugsweise findet das periodische Hin- und Herbewegen des mindestens einen Positioniermittels, der Form und/oder der Zieheinrichtung phasenversetzt oder phasenverschoben statt, so dass die Zugbelastung auf die Verstärkung nicht durchgehend aufgehoben wird, sondern zeitlich versetzt nacheinander oder auch teilweise überlappend stets nur bestimmte Abschnitte der Verstärkung entlastet oder sogar gestaucht werden. Dadurch kommt es, wenn die Kräfte, die beim Herstellen des Kunststoffprofils auf die Verstärkung in Herstellungsrichtung und gegebenenfalls partiell auch gegen die Herstellungsrichtung aufgebracht werden, zu einem periodischen Lastwechsel unterschiedlicher aufeinanderfolgender Bereiche der Verstärkung zwischen der Zieheinrichtung und dem ersten Positioniermittel. Diese Lastwechsel sind vergleichbar mit einer Schlangenbewegung.

Ein weiteres Verfahren zur Lösung mindestens eines Teilaspekts der Aufgabe sieht es vor, dass die Form aus mehreren in Herstellungsrichtung aufeinanderfolgenden Formabschnitten gebildet wird, wobei jeder Formabschnitt einen mit dem Querschnitt des herzustellenden Kunststoffprofils korrespondierenden Formgebungsdurchlass aufweist. Außerdem ist vorgesehen, die Formabschnitte bei Bedarf so zu verlagern, dass Längsmittelachsen oder Längsrichtungen der Formgebungsdurchlässe in den Formabschnitten auf der Längsmittelachse des jeweils herzustellenden Kunststoffprofils liegen oder wahlweise tangential hierzu verlaufen. Auf diese Weise ist es möglich, mit ein und derselben Form Kunststoffprofile mit verschiedenen Verläufen, insbesondere sowohl geradlinigen als auch gebogenen Verläufen, herzustellen.

Eine Vorrichtung zur Lösung mindestens eines Teilaspekts der eingangs genannten Aufgabe weist die Merkmale des Anspruchs 10 auf. Demnach sind mehrere aufeinanderfolgende Positioniermittel vorgesehen und es ist mindestens ein Positioniermittel relativ zum wenigstens einen anderen Positioniermittel bewegbar. Wenn das bewegliche Positioniermittel momentan gegen die Herstellungsrichtung auf der Verstärkung zurückbewegt wird, "verschlingt" es quasi einen Abschnitt der Verstärkung, wodurch die Zugbelastung dieses Bereichs der Verstärkung momentan aufgehoben wird oder es sogar zu einem kurzzeitigen abschnittsweisen Stauchen der Verstärkung kommt. So wird erfindungsgemäß einer Verformung, insbesondere Kontraktion, der Verstärkung entgegengewirkt oder eine eventuell erfolgte Kontraktion der Verstärkung wieder rückgängig macht.

Bei einer bevorzugten Ausbildung der Vorrichtung ist jedes Positioniermittel blendenartig ausgebildet. Alternativ oder zusätzlich ist vorgesehen, dass jedes Positioniermittel einen Durchlass für die Verstärkung aufweist und/oder die Größe der Durchlässe der aufeinanderfolgenden Positioniermittel in Herstellungsrichtung abnimmt. Die blendenartigen Positioniermittel führen zur Bündelung der einzelnen Komponenten der Verstärkung, beispielsweise mehrerer durchlaufender Stränge. Durch das alternative oder zusätzliche Verkleinern der Durchlässe der aufeinanderfolgenden Positioniermittel erfolgt die Bündelung stufenweise, indem von einem Positioniermittel zum anderen die Verstärkung im Querschnitt zunehmend verringert wird. Durch die nach und nach kleiner werdenden Durchlässe der aufeinanderfolgenden Positioniermittel kommt es zu einem allmählichen positionsgenauen Bündeln der einzelnen Komponenten der Verstärkung, wodurch eine gleichmäßige Kraftverteilung in der Verstärkung bei der Herstellung des Kunststoffprofils entsteht.

Eine vorteilhafte Ausgestaltung der Vorrichtung sieht vor, dass jedes hin- und herbewegbare Positioniermittel unabhängig vom anderen Positioniermittel periodisch bewegbar ist. Diese Bewegung des jeweiligen Positioniermittels kann durch einen Antrieb oder einen Aktuator erfolgen, wobei bevorzugte jedem bewegbaren Positioniermittel oder Gruppen mehrerer Positioniermittel ein eigener Antrieb bzw. Aktuator zugeordnet ist. Die Antriebe oder Aktuatoren lassen eine individuelle Bewegung der Positioniermittel längs der Herstellungsrichtung des verstärkten Kunststoffprofils zu. Vor allem ermöglichen sie eine unabhängige bzw. gezielt aufeinander abgestimmte Aufeinanderfolge der Bewegungen der Positioniermittel, wenn mehrere bewegbare Positioniermittel vorgesehen sind.

Es ist weiterhin bevorzugt vorgesehen, dass in Herstellungsrichtung der Form mindestens eine periodisch hin- und herbewegbare Zieheinrichtung nachfolgt, wobei die Zieheinrichtung insbesondere mit einer Kühlung versehen ist und/oder aus mehreren zusammen- und auseinanderbewegbaren Greiferteilen besteht, die das herzustellende Kunststoffprofil im zusammengefahrenen Zustand vollständig umgreifen, vorzugsweise zusammenpressen. Die Zieheinrichtung verfügt so über mehrere Funktionen. Sie dient nicht nur zum diskontinuierlichen Fortbewegen des verstärkten Kunststoffprofils in Herstellungsrichtung, sondern auch zum Kühlen und/oder Zusammenpressen des Kunststoffprofils, wodurch Letzteres kalibriert wird. Eine Vorrichtung mit einer solchen Zieheinrichtung eignet sich auch dazu, das verstärkte Kunststoffprofil aus einem thermoplastischen Kunststoff herzustellen.

Vorzugsweise werden die Formgebungsabschnitte derart verlagert, dass sich die Neigungen der Längsrichtungen der Formgebungsdurchlässe ändern. Durch unterschiedliche Neigungen der Längsmittelachsen der Formgebungsdurchlässe unterschiedlicher Formabschnitte kann ein beliebig gekrümmtes Kunststoffprofil hergestellt werden. Die Formabschnitte können aber auch so ausgerichtet werden, dass die Längsrichtungen bzw. Längsmittelachsen ihrer Formgebungsdurchlässe auf einer gleichen, geraden Linie liegen, um geradlinige Kunststoffprofile herzustellen.

Eine bevorzugte Weiterbildung des Verfahrens sieht es vor, die Formabschnitte derart zu verlagern, dass bei plattenartigen Formabschnitten in der Plattenmitte liegende Stellen der Längsmittelachsen der Formgebungsdurchlässe auf der Längsmittelachse des herzustellenden Kunststoffprofils liegen. Dann wird durch diese Stellen der Längsmittelachsen aller Formabschnitte der gerade oder auch ungerade Verlauf des Kunststoffprofils in Herstellungsrichtung festgelegt.

Bei einer weiteren Vorrichtung zur Lösung der eingangs genannten Aufgabe ist die Form aus mehreren in Herstellungsrichtung aufeinanderfolgenden Formabschnitten mit zum Querschnitt des herzustellenden Kunststoffprofils korrespondierenden Formgebungsdurchlässen gebildet, wobei die Größe des Formgebungsdurchlasses in jedem Formabschnitt sich in Herstellungsrichtung ändert. Vorzugsweise sind dadurch die Formwandungen der Formgebungsdurchlässe ballig ausgebildet, so dass die Formgebungsdurchlässe der Formabschnitte eine Einschnürung in einer quer zur Herstellungsrichtung bzw. Längsachse des Kunststoffprofils verlaufenden Ebene aufweist. Dadurch tritt der Formgebungsdurchlass nicht über seine gesamte Länge, sondern nur an seiner engsten Stelle mit dem herzustellenden Kunststoffprofil in Kontakt. Hierdurch lässt sich auch bei verkippten Formabschnitten ein Kunststoffprofil herstellen, und zwar dann mit einem in Abhängigkeit von der Verkippung der Formabschnitte mehr oder weniger stark gekrümmten oder sonst wie ungeradlinigen, insbesondere beliebigen, Verlauf.

Die Erfindungen werden nachfolgend anhand der Zeichnung näher erläutert. In dieser zeigen:
- Fig. 1: eine schematische Seitenansicht einer Vorrichtung zur Herstellung eines verstärkten Kunststoffprofils,
- Fig. 2: eine graphische Darstellung der zeitlichen Bewegungsabläufe einzelner Komponenten der Vorrichtung der Fig. 1,
- Fig. 3: einen schematisch dargestellten Schnitt durch eine Form zur Herstellung eines bogenförmigen Kunststoffprofils, und
- Fig. 4: die Form der Fig. 3 in einer Anordnung zur Herstellung eines geradlinigen Kunststoffprofils.

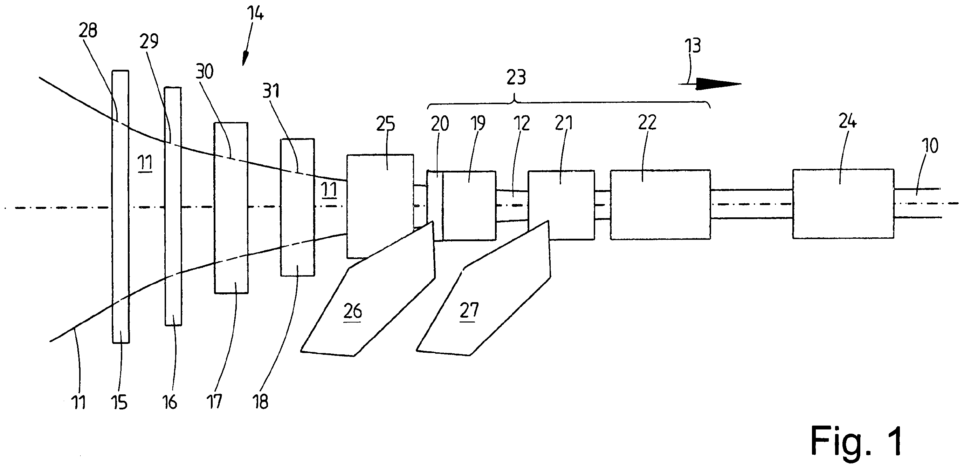

Die wesentlichen Komponenten einer Vorrichtung zur Herstellung eines verstärkten Kunststoffprofils zeigt die Fig. 1. Bei dieser Vorrichtung handelt es sich um eine Pultrusionsvorrichtung für ein Kunststoffprofil 10 mit einer Verstärkung 11. Die Verstärkung 11 ist vollständig in einem Kunststoff 12 eingebettet, bei dem es sich sowohl um ein Duroplast als auch ein Thermoplast handeln kann.

Die Verstärkung 11 kann aus einer Vielzahl durchgehender Stränge, aber auch einem Vlies, einem Gewebe und/oder einem Gewirk gebildet sein. Auch kann die Verstärkung 11 aus Kombinationen von Strängen, Vliesen, Gewirken und/oder Geweben bestehen. Vorzugsweise ist die Verstärkung 11 aus hochfesten Kunststoff-, Glas- und/oder Kohlefasern bzw. Strängen gebildet.

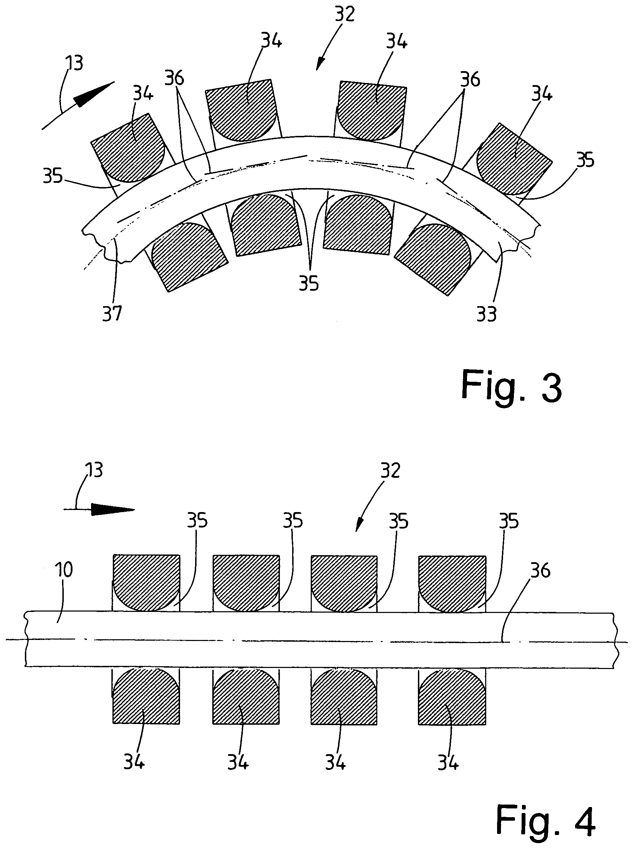

Das Kunststoffprofil 10 kann beliebige Querschnitte aufweisen. In Längsrichtung, die der Herstellungsrichtung 13 des verstärkten Kunststoffprofils 10 entspricht, kann das Kunststoffprofil 10 entweder wie in den Fig. 1 und 4 dargestellt geradlinig verlaufen oder aber auch gemäß der Fig. 3 bogenförmig. Darüber hinaus kann das Kunststoffprofil 10 über beliebige andere Verläufe in Längsrichtung verfügen. Die Erfindung ist daher weder auf den Querschnitt noch auf den Verlauf des Kunststoffprofils 10 beschränkt. Vor allem können ungerade Verläufe des Kunststoffprofils 10 sowohl auf eine Ebene beschränkt (zweidimensional) oder auch dreidimensional sein.

Die gezeigte Vorrichtung verfügt über mehrere in Herstellungsrichtung 13 mit Abstand aufeinanderfolgende Komponenten. Am Anfang der Vorrichtung befindet sich eine Positioniereinrichtung 14 für die Verstärkung 11. Erfindungsgemäß ist die Positioniereinrichtung 14 aus mehreren mit Abstand in Herstellungsrichtung 13 aufeinanderfolgenden Positioniermitteln gebildet. Die gezeigte Positioniereinrichtung 14 ist aus vier aufeinanderfolgenden Positioniermitteln 15, 16, 17 und 18 gebildet. Die Erfindung ist hierauf aber nicht beschränkt. Die Positioniereinrichtung 14 braucht im einfachsten Falle nur zwei Positioniermittel aufzuweisen und kann auch aus mehr als vier Positioniermittel 15, 16, 17, 18 gebildet sein.

In Herstellungsrichtung 13 folgt auf die Positioniereinrichtung 14 eine Tränkeeinrichtung 25, zum Zuführen des flüssigen Kunststoffs 12 zur in der Positioniereinrichtung 14 gebündelten Verstärkung 11, eine Heizeinrichtung 19 mit einem gekühlten Einlass 20 am Anfang, ein Gelzonenbereich 21 und ein Endreaktionsbereich 22. Die Heizeinrichtung 19 mit dem gekühlten Einlasse 20, der Gelzonenbereich 21 und der Endreaktionsbereich 22 bilden zusammen eine ringförmige, geschlossen das Kunststoffprofil 10 umgebende Form 23 der Vorrichtung, wozu sie gegebenenfalls ganz oder teilweise zusammengefasst sein können zu einer einzigen oder gegebenenfalls auch mehreren Einheiten.

In Herstellungsrichtung 13 gesehen hinter dem Endreaktionsbereich 22 der Form 23 befindet sich mit Abstand eine Zieheinrichtung 24, die das Kunststoffprofil 10 durch die Positioniereinrichtung 14, die Tränkeeinrichtung 25 und die Form 23 zieht. Die Zieheinrichtung 24 dient auch zum Strammhalten der Verstärkung 11 während des gesamten Herstellungsvorgangs des Kunststoffprofils 10, indem die einzelnen Bestandteile, beispielsweise Stränge, der Verstärkung 10 mit einer gegen die Haltekraft der Zieheinrichtung 24 wirkenden Rückhaltekraft von einer in den Figuren nicht gezeigten Abrolleinrichtung der Stränge beaufschlagt werden.

Bei der hier gezeigten Vorrichtung ist der Tränkeeinrichtung 25 eine in der Fig. 1 nur schematisch dargestellte Ableiteinrichtung 26 für überschüssiges Harz zugeordnet. Eine weitere Ableiteinrichtung 27 ist dem Gelzonenbereich 21 zugeordnet. Diese Ableiteinrichtung 27 dient zur Ableitung von niedrigviskosem Harz aus der bereits gestarteten Reaktion.

Bei der hier gezeigten Vorrichtung sind alle vier Positioniermittel 15 bis 18, die Tränkeeinrichtung 25, die einzelnen Komponenten der Form 23 und die Zieheinrichtung 24 in vorzugsweise regelmäßigen Zeitabständen kurzzeitig (periodisch) in Herstellungsrichtung 13 und gegen die Herstellungsrichtung 13 bewegbar, insbesondere hin- und herbewegbar. Zu diesem Zweck ist insbesondre jedem Positioniermittel 15 bis 18, der Tränkeeinrichtung 25 der Form 23 und der Zieheinrichtung 24 ein in den Figuren nicht gezeigtes Bewegungsorgan zugeordnet. Hierbei kann es sich um einen reversierbaren Linearantrieb handeln, dessen Bewegungsachse in Herstellungsrichtung 13 verläuft. Es ist auch denkbar, die hin- und hergehenden Bewegungen der Positioniermittel 15 bis 18, der Tränkeeinrichtung 25 der Form 23 und/oder der Zieheinrichtung 24 durch Aktuatoren, zum Beispiel Piezos, herbeizuführen.

Eine denkbare alternative Ausgestaltung der Vorrichtung sieht es vor, die Form 23 als Ganzes hin und her zu bewegen. Dann führen die einzelnen Komponenten der Form 23 Bewegungen gleichzeitig aus. Die Form 23 kann dazu aus zusammenhängenden und nicht voneinander beabstandeten Komponenten gebildet sein, indem die Heizeinrichtung 19, der Gelzonenbereich 21 und der Endreaktionsbereich 22 unmittelbar aufeinanderfolgen.

Die einzelnen Positioniermittel 15 bis 18 der Positioniereinrichtung 14 sind blendenartig ausgebildet. Dazu besteht jedes Positioniermittel 15, 16, 17, 18 aus einer quer zur Herstellungsrichtung 13 verlaufenden Platte. Die Platten können gleich dick sein, aber auch - wie im gezeigten Ausführungsbeispiel - unterschiedliche Dicken haben, indem die Positioniermittel 17 und 18 dicker sind als die Positioniermittel 15 und 16, und zwar etwa doppelt so dick. Jedes der plattenartigen Positioniermittel 15 bis 18 verfügt über einen Durchlass 28, 29, 30, 31. Durch die Durchlässe 28, 29, 30 und 31 der Positioniermittel 15, 16, 18 ist die Verstärkung 11 in Richtung zur Tränkeeinrichtung 25 hindurchgeführt. Die Durchlässe 28 bis 31 der einzelnen Positioniermittel 15 bis 18 sind unterschiedlich groß. In Herstellungsrichtung 13 werden die Durchlässe 28 bis 31 der Positioniermittel 15 bis 18 zunehmend kleiner. Das in Herstellungsrichtung 13 erste Positioniermittel 15 verfügt demnach über den größten Durchlass 28, während das in Herstellungsrichtung 13 gesehen letzte Positioniermittel 18 vor der Tränkeeinrichtung 25 den kleinsten Durchlass 31 aufweist. Durch die blendenartige Ausbildung der Positioniermittel 15 bis 18 mit den in Herstellungsrichtung 13 immer kleiner werdenden Durchlässen 28 bis 31 wird die Verstärkung 11 von den Positioniermitteln 15 bis 18 in Herstellungsrichtung 13 gebündelt und zunehmend kompaktiert, wodurch die Verstärkung 11 in Herstellungsrichtung 13 trichterartig in Richtung zur Tränkeeinrichtung 25 zusammengeführt wird.

Die Positioniermittel 15 bis 18 sind im in der Fig. 1 gezeigten Ausführungsbeispiel gleichermaßen voneinander beabstandet. Die Zwischenräume zwischen aufeinanderfolgenden Positioniermitteln 15 bis 18 sind etwa gleich groß. Im gezeigten Ausführungsbeispiel betragen die Zwischenräume zwischen jeweils zwei Positioniermitteln 15 bis 18 etwa der Dicke des Positioniermittels 17 bzw. 18.

Die Zieheinrichtung 24 ist so ausgebildet, dass sie sich vom fertigen Kunststoffprofil 10 lösen lässt. Dazu weist die Zieheinrichtung 24 beispielsweise zusammen- und auseinanderbewegbare Greifer auf. Wenn die Zieheinrichtung 24 das Kunststoffprofil 10 festhält, kann dieses von der Zieheinrichtung 24 in Herstellungsrichtung 13 vorbewegt werden. Wenn die Zieheinrichtung 24 vom Kunststoffprofil 10 gelöst ist, kann die Zieheinrichtung 24 gegen die Herstellungsrichtung 13 zurückbewegt werden.

Die Zieheinrichtung 24 kann gegebenenfalls mit einer Kühlung versehen sein. Die Kühlung der Zieheinrichtung 24 ist vor allem dann vorgesehen, wenn mit der Vorrichtung ein Kunststoffprofil 10 hergestellt werden soll, bei dem die Verstärkung 11 in einem thermoplastischen Kunststoff 12 eingebettet ist. Die Zieheinrichtung 24 kann insbesondere zur Herstellung eines Kunststoffprofils 10 aus einem thermoplastischen Kunststoff 12 auch zum Zusammenpressen des Kunststoffprofils 10 in Umfangsrichtung ausgebildet sein. Dann findet die Entformung des Kunststoffprofils 10 in der zusammenpressbaren Zieheinrichtung 24 statt. Diese Entformung erfolgt nach einer Kalibrierung des Kunststoffprofils 10. Zu diesem Zweck kann die Zieheinrichtung 24 teilbar ausgebildet sein, indem sie aus zwei oder mehreren quer zur Herstellungsrichtung 13 zusammen- und auseinanderbewegbaren Teilen, insbesondere Pressteilen, besteht. Bei zusammengefahrenen Pressteilen der Zieheinrichtung 24 erfolgt eine Endformung unter Druck bzw. Kalibrierung des ringsherum von den Pressteilen umgebenden Kunststoffprofils 10. Bei auseinandergefahrenen Pressteilen ist die Zieheinrichtung 24 vom Mantel des Kunststoffprofils 10 getrennt, wodurch die Zieheinrichtung 24 ohne Kontakt zum Mantel des Kunststoffprofils 10 gegen die Herstellungsrichtung 13 zurückfahrbar ist.

Linearantriebe oder Aktuatoren zum Vor- und Zurückfahren der Zieheinrichtung 24 sind in Fig. 1 nicht dargestellt. Ebenso enthält die Fig. 1 keine Darstellung derartiger Antriebe oder Aktuatoren zum Verfahren des Gelzonenbereichs 21, des Endreaktionsbereichs 22 und der Heizeinrichtung 19 der Form 23 sowie der Tränkeeinrichtung 25. Solche Linearantriebe können in an sich bekannter Weise ausgebildet sein. Die Aktuatoren können aus Piezos bestehen. Letztere führen zu verhältnismäßig kleinen Verfahrwegen.

Demgegenüber ermöglichen Linearantriebe größere Verfahrwege, und zwar in beliebiger Länge.

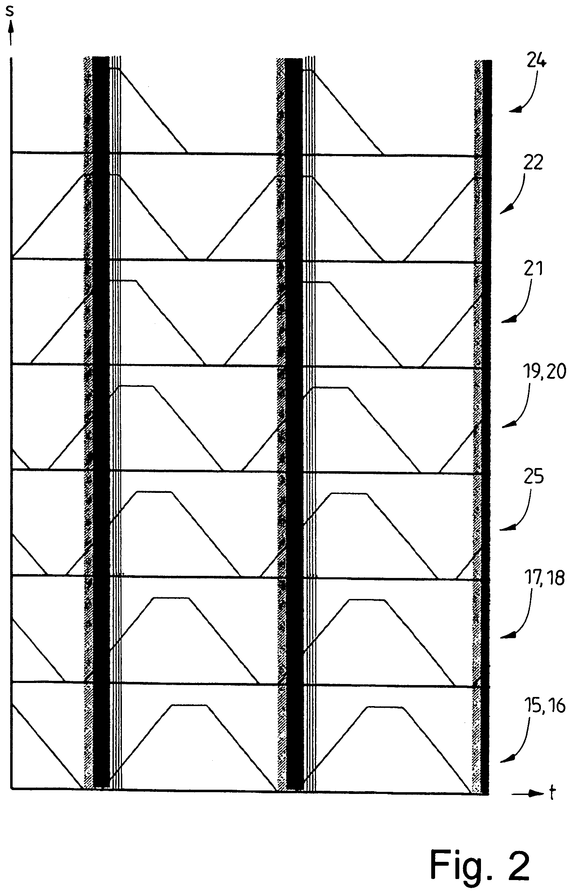

Nachfolgend wird das erfindungsgemäße Verfahren unter Bezugnahme auf die Fig. 1 und 2 näher beschrieben.

Bei der folgenden Beschreibung des Verfahrens wird davon ausgegangen, dass alle vier Positioniermittel 15 bis 18, die Tränkeeinrichtung 25, alle Teile der Form 23 und die Zieheinrichtung 24 periodisch in Herstellungsrichtung 13 und gegen die Herstellungsrichtung 13 um jeweils den gleichen Weg hin- und herbewegbar sind, wobei die Bewegung der Positioniermittel 15 bis 18, der Tränkeeinrichtung 25, der Teile der Form 23 und der Zieheinrichtung 24 phasenverschoben sind. Während der Hin- und Herbewegung der vorstehend erwähnten beweglichen Teile der Vorrichtung wird die Verstärkung 11 auf ganzer Länge stramm gehalten.

In der Fig. 2 sind die Bewegungsabläufe in einem Zeitwegdiagramm dargestellt. Auf der Abszisse ist die Zeit t eingetragen und auf der Ordinate der Weg s. Bei dem hier gezeigten Zeitwegdiagramm wird davon ausgegangen, dass die Positioniermittel 15 und 16 einerseits und die Positioniermittel 17 und 18 andererseits gleichzeitig bewegt werden. Es sind im Zeitwegdiagramm der Fig. 2 von unten nach oben die Bewegungsabläufe der Positioniermittel 15 und 16, der Positioniermittel 17 und 18, der Tränkeeinrichtung 25, der Heizeinrichtung 19 mit dem gekühlten Einlass 20, des Gelzonenbereichs 21, des Endreaktionsbereichs 22 und die Zieheinrichtung 24 übereinander dargestellt. Das Öffnen der Greifer der Zieheinrichtung 24 ist in senkrechten Bereichen dargestellt. Zeitlich darauffolgend ist der Zeitraum, in dem die Greifer der Zieheinrichtung 24 geöffnet sind, durch einen schräg schraffierten Balken dargestellt. Daneben ist mit senkrechter Schraffur die Phase des Schließens der Greifer dargestellt. Die zeitlich längeren (weißen) Bereiche zwischen den senkrechten Balken für das Öffnen der Zieheinrichtung 24, die geöffnete Zieheinrichtung 24 und das Schließen der Zieheinrichtung 24 stellen Zeitphasen dar, in denen die Greifer der Zieheinrichtung 24 geschlossen sind. Jede dieser Zeitphasen ist um ein Vielfaches größer als die Zeitphase, in denen die Greifer der Zieheinrichtung 24 öffnen, schließen und geöffnet sind.

Die Richtung des in der Fig. 2 auf der Ordinate dargestellten Wegs s entspricht der Bewegung der einzelnen Komponenten der Vorrichtung gegen die Herstellungsrichtung 13. Demnach betrifft eine in der Fig. 2 dargestellte Bewegung in Richtung der Ordinate eine Bewegung gegen die Herstellungsrichtung 13 des Kunststoffprofils 10.

In der Fig. 2 ist oben der Bewegungsablauf der Zieheinrichtung 24 dargestellt. Demnach bewegt sich die Zieheinrichtung 24 bei ihren geöffneten Greifern relativ rasch gegen die Herstellungsrichtung 13. Während des nachfolgenden Schließens der Greifer der Zieheinrichtung 24 steht die Zieheinrichtung 24 still. Anschließend wird die Zieheinrichtung 24 bei geschlossenen Greifern langsam in Herstellungsrichtung 13 vorbewegt, und zwar etwa in der halben Zeit, in der die Zieheinrichtung 24 während eines jeweiligen Bewegungszykluses geschlossen ist. Die vorstehend beschriebene Bewegung der Zieheinrichtung 24 wiederholt sich für jeden Bewegungszyklus.

Die Bewegungen aller anderen Komponenten der Vorrichtung, nämlich der Endreaktionsbereich 22, der Gelzonenbereich 21, die Heizeinrichtung 19 mit dem gekühlten Einlass 20, die Tränkeeinrichtung 25, die Positioniermittel 17 und 18 und die Positioniermittel 15 und 16, laufen nach dem gleichen Bewegungsmuster ab, sind aber - wie die Fig. 2 erkennen lässt - phasenverschoben, und zwar bezogen auf die nächstfolgende Einrichtung um die halbe Zeit, in der die Greifer der Zieheinrichtung 24 geöffnet werden, offen sind und geschlossen werden (senkrechte Balken der Fig. 2). Der Endreaktionsbereich 22 vor der Zieheinrichtung 24 steht still, während die Zieheinrichtung 24 geöffnet wird, geöffnet ist und geschlossen wird. Nachdem die Zieheinrichtung 24 geschlossen ist, wird der Endreaktionsbereich 22 in Herstellungsrichtung 13 bewegt, und zwar immer etwas weniger als die halbe Zeit, in der die Zieheinrichtung 24 geschlossen ist. Nach einer kurzen Pause wird der Endreaktionsbereich 22 dann gegen die Herstellungsrichtung 13 zurückbewegt, und zwar mit gleicher Geschwindigkeit und den gleichen Weg wie zuvor der Endreaktionsbereich 22 in Herstellungsrichtung 13 vorbewegt worden ist. Die gleichen Bewegungen führen mit demselben zeitlichen Versatz der Gelzonenbereich 21, die Heizeinrichtung 19 mit dem gekühlten Einlass 20, die Tränkeeinrichtung 25, die Positioniermittel 17 und 18 und die Positioniermittel 15 und 16 aus.

Aus der Fig. 2 wird deutlich, dass die gleichen Bewegungen aller Komponenten der Vorrichtung bis auf die Zieheinrichtung 24 mit zeitlichem Versatz aufeinanderfolgen, einander aber teilweise überlappen. Der Zeitversatz ist derart gewählt, dass die Bewegung der Positioniermittel 15 und 16 am Anfang der Vorrichtung um die halbe Zeit, in der die Greifer der Zieheinrichtung 24 geschlossen sind, gegenüber der Bewegung des Endreaktionsbereichs versetzt sind.

Abweichend von der Darstellung der Fig. 2 können auch alle vier Positioniermittel 15 bis 18 unabhängig voneinander mit geringem Zeitversatz nacheinander hin- und herbewegt werden. Es ist auch denkbar, nur zwei Positioniermittel, beispielsweise die Positioniermittel 15 und 17 oder die Positioniermittel 16 und 18 periodisch längs des Kunststoffprofils 10 hin- und herzubewegen, während die übrigen beiden Positioniermittel 15, 17 bzw. 16, 18 nicht hin- und herbewegt werden.

Durch das phasenweise Hin- und Herbewegen der einzelnen Komponenten der Vorrichtung, insbesondere gemäß der Fig. 2, werden einzelne Bereiche der Verstärkung 11 abwechselnd auf Zug oder auf Druck belastet, also gestaucht. Es ist auch denkbar, die periodisch aufeinanderfolgenden Bewegungen einzelner Komponenten der Vorrichtung so vorzunehmen, dass die Zugbelastung, die auf die Verstärkung 11 beim Durchziehen derselben durch die Vorrichtung ausgeübt wird, periodisch bereichsweise ganz oder teilweise reduziert wird. Durch die periodisch bereichsweise sich ändernden Zugbelastungen, die auf die Verstärkung 11 bei der Herstellung des Kunststoffprofils 10 ausgeübt werden, kommt es zu einem schlangenähnlichen Hindurchschlängeln der Verstärkung 11 durch die einzelnen Komponenten der Vorrichtung, wodurch bei der Herstellung des Kunststoffprofils 10 auf die Verstärkung ausgeübte Einschnürung bzw. Querkontraktion beseitigt oder zumindest reduziert werden und dadurch sich die Gestalt der Verstärkung 11 bei der Herstellung des Kunststoffprofils 10 nicht ändert und auch die Position der Verstärkung 11 bei der Herstellung des Kunststoffprofils 10 im Kunststoff 12 unverändert bleibt.

Es ist ein abweichendes Verfahren denkbar, bei dem nur die Zieheinrichtung 24 und mindestens eines der Positioniermittel 15 bis 18 periodisch bezogen auf die Herstellungsrichtung 13 hin- und herbewegt werden. Dadurch findet eine periodische abschnittsweise Reduzierung oder Beseitigung der bei der Herstellung des Kunststoffprofils 10 auf die Verstärkung 11 ausgeübte Zugkräfte statt, wobei es auch periodisch zu abstandsweisen Stauchungen in der Verstärkung 11 kommen kann. Auch auf diese Weise wird verhindert, dass die Verstärkung 11 beim Bündeln und Komprimieren, also vor der Tränkeeinrichtung 25 und der Form 23, sich nicht in unerwünschter Weise zusammenzieht oder verlagert.

Die Fig. 3 und 4 zeigen ein weiteres Ausführungsbeispiel der zuvor beschriebenen Erfindung. Es kann sich bei diesem Ausführungsbeispiel auch um eine eigenständige Erfindung handeln.

In den Fig. 3 und 4 ist schematisch nur ein Teil einer Vorrichtung zur Herstellung des mit der Verstärkung 11 versehenen Kunststoffprofils dargestellt. Es handelt sich hierbei um eine Form 32, die in ihrer Gestalt so veränderbar ist, dass damit Kunststoffprofile beliebiger Verläufe herstellbar sind, und zwar nicht nur das in der Fig. 4 gezeigte gerade Kunststoffprofil 10, sondern auch ein gekrümmtes Kunststoffprofil 33, das sowohl verstärkt als auch unverstärkt sein kann. Beim Kunststoff 12 für das Kunststoffprofil 33 kann es sich wie beim Kunststoff 12 des Kunststoffprofils 10 um ein Duoplast oder ein Thermoplast handeln.

Die Form 32 ist aus mehreren in Herstellungsrichtung 13 mit Abstand aufeinanderfolgenden Formabschnitten 34 gebildet. Im gezeigten Ausführungsbeispiel besteht die Form 32 aus vier gleichen Formabschnitten 34, die einstückig den gesamten Umfang des Kunststoffprofils 10, 33 ringartig umschließen. Die Form 32 kann aber auch über eine größere oder kleinere Anzahl von Formabschnitten 34 verfügen, die gegebenenfalls auch unterschiedlich ausgebildet sein können. Jeder im gezeigten Ausführungsbeispiel plattenartig ausgebildete Formabschnitt 34 ist mit einem mittigen Formgebungsdurchlass 35 versehen. Im vorliegenden Falle sind alle Formgebungsdurchlässe 35 gleich ausgebildet. Es ist aber auch denkbar, dass die Formgebungsdurchlässe 35 wenigstens einiger Formabschnitte 34 unterschiedlich gestaltet sind.

Der Formgebungsdurchlass 35 in jedem Formabschnitt 34 ist mit sich in Herstellungsrichtung 13 änderndem Profil bzw. Verlauf versehen. Im Ausführungsbeispiel der Fig. 3 und 4 ist die engste Stelle jedes Formgebungsdurchlasses 35 in der Mitte des plattenartigen Formabschnitts 34. Von hier aus erweitert sich der Formgebungsdurchlass 35 zu den gegenüberliegenden Außenflächen des jeweiligen Formabschnitts 34, so dass die Kontur jedes Formgebungsdurchlasses 35 gleichmäßig ballig ist. In den Fig. 3 und 4 ist der Querschnitt jedes Formgebungsdurchlasses 35 bogenförmig, und zwar etwa halbkreisförmig, ausgebildet. Es können aber andere Querschnitte, beispielsweise dreieckige Querschnitte, elliptische Querschnitte oder dergleichen vorhanden sein. Mindestens an der engsten Stelle in der Mitte des betreffenden Formabschnitts 34 korrespondiert der Formgebungsdurchlass 35 mit dem Querschnitt des herzustellenden Kunststoffprofils 10.

Dadurch, dass sich die Größe jedes Formgebungsdurchlasses 35 in Längsrichtung 36 des jeweiligen Formgebungsdurchlasses 35 ändert, ist die Umfangsfläche jedes Formgebungsdurchlasses 35 ballig. Nur in einer Ebene, in der die engste Stelle des jeweiligen Formgebungsdurchlasses 35 liegt, im gezeigten Ausführungsbeispiels die Mitte des jeweiligen Formabschnitts 34, besteht ein Kontakt des Formgebungsdurchlasses 35 mit der Außenfläche des herzustellenden Kunststoffprofils 10. Dadurch ist es möglich, die Formabschnitte 34 derart schräg zu stellen, dass die Längsrichtung 36 des Formgebungsdurchlasses 35 jedes Formabschnitts 34 in unterschiedlichen Richtungen verläuft. Das ermöglicht die Herstellung nicht nur gerader Kunststoffprofile 10, sondern auch eines gebogenen Kunststoffprofils 33 (Fig. 3). Durch entsprechende Schrägstellung der Formabschnitte 34 kann ein Kunststoffprofil mit einem beliebigen Verlauf hergestellt werden. Das Kunststoffprofil kann sowohl zwei als auch dreidimensional gekrümmt sein. Im Ausführungsbeispiel der Fig. 4 verlaufen alle Formabschnitte 34 der Form 32 mit geringem Abstand parallel zueinander, wodurch die Längsrichtungen 36 aller Formgebungsdurchlässe 35 auf einer gemeinsamen geraden Linie, nämlich der Mittellinie des herzustellenden geraden Kunststoffprofils 10, liegen. Werden hingegen die Formabschnitte 34 gemäß der Darstellung in der Fig. 3 verkippt, und zwar vorzugsweise im gleichen Umfange und in gleicher Richtung, entsteht das in der Fig. 3 gezeigte gebogene Kunststoffprofil 33. Dann verlaufen die Längsrichtungen 36 der Formgebungsdurchlässe 35 der Formabschnitte 34 tangential zur Längsmittelachse 37 des gebogenen Kunststoffprofils 33.

Die Formabschnitte 34 sind bevorzugt aus unterschiedlichen Materialien gebildet, um die Reibung am Mantel bzw. der Matrix des herzustellenden Kunststoffprofils 10, 33 zu reduzieren. Beispielsweise könnte der in Herstellungsrichtung 13 erste Formabschnitt 34 aus Stahl, vorzugsweise Edelstahl, gebildet sein. Der darauffolgende Formabschnitt 34 könnte aus Kupfer gebildet sein. Die übrigen Formabschnitte 34 können aus thermoplastischem Kunststoff, beispielsweise Polyoxymethylen, oder Aluminium gebildet sein.

Denkbar ist es auch, alle oder nur ausgewählte Formenabschnitte 34, insbesondere die in Herstellungsrichtung 13 hinten liegenden Formabschnitte 34, zu kühlen und/oder mindestens die ersten Formabschnitte 34 zu beheizen.

Das Verfahren zur Herstellung beliebige Verläufe aufweisender Kunststoffprofile 10, 33 läuft mit der zuvor beschriebenen Form 32 folgendermaßen ab:

Je nach der gewünschten Gestalt des herzustellenden Kunststoffprofils 10, 33 werden die Formabschnitte 34 relativ zueinander ausgerichtet und fixiert. Zur Herstellung des geradlinigen Kunststoffprofils 10 sind alle Formabschnitte 34 so relativ zueinander angeordnet, dass sie parallel zueinander verlaufen, und zwar vorzugsweise mit gleichmäßigen Abständen. Die Längsmittelachsen bzw. Längsrichtungen 36 der Formgebungsdurchlässe 35 aller Formabschnitte 34 liegen dann auf einer gemeinsamen Linie, die der geradlinigen Längsmittelachse 37 des ungekrümmten Kunststoffprofils 10 entspricht (Fig. 4).

Wenn hingegen das gekrümmte Kunststoffprofil 33 hergestellt werden soll, werden vorzugsweise alle Formabschnitte 34 gleichermaßen und gleichsinnig zueinander verkippt, und zwar so, dass die Mittelebenen aller Formabschnitte 34 an einem gemeinsamen Punkt zusammenlaufen. Dabei liegen die Längsmittelachsen 36 der Formgebungsdurchlässe 35 aller Formabschnitte 34 tangential auf der bogenförmigen Längsmittelachse 37 des Kunststoffprofils 33. Werden die Formabschnitte 34 mehrachsig verkippt, sind dreidimensional gekrümmte Kunststoffprofile herstellbar.

Es ist denkbar, dass mindestens ein in Bezug auf die Herstellungsrichtung 13 erster Formabschnitt 34 beheizt wird, während mindestens der letzte Formabschnitt 34 zum Kühlen des herzustellenden Kunststoffprofils 10 bzw. 33 dient. Die zu kühlenden Formabschnitte 34 können aus einem eine relativ glatte und gleitfähige Oberfläche aufweisenden Material, beispielsweise einen entsprechenden Kunststoff, aber auch Aluminium, Bronze oder Kupfer gebildet sein. Der jeweils beheizte Formabschnitt ist demgegenüber aus einem wärmeresistenten Material, beispielsweise Stahl, insbesondere einem chromartigen Stahl, aber gegebenenfalls auch Aluminium, Kupfer oder Bronze gebildet.

## Patentansprüche

1. Verfahren zur Herstellung eines eine Verstärkung (11) aufweisenden Kunststoffprofils (10, 33), wobei die Verstärkung (11) durchgehend durch eine Positioniereinrichtung (14) und eine in Herstellungsrichtung (13) darauffolgende Form (23, 32) geführt und das Kunststoffprofil (10, 33) mit der darin eingebetteten Verstärkung (11) von einer Zieheinrichtung (24) in Herstellungsrichtung (13) durch die Positioniereinrichtung (14) und die Form (23, 32) hindurchgezogen wird, wobei die Verstärkung (11) durch eine Positioniereinrichtung (14) mit mindestens zwei aufeinanderfolgenden, separaten Positioniermitteln (15, 16, 17, 18) hindurchgezogen wird, **dadurch gekennzeichnet, dass** dabei mindestens ein Positioniermittel (15, 16, 17, 18) relativ zu wenigstens einem anderen bewegt wird.

2. Verfahren nach Anspruch 1, **dadurch gekennzeichnet, dass** der Abstand zwischen mindestens zwei in Herstellungsrichtung (13) aufeinanderfolgenden Positioniermitteln (15, 16, 17, 18) periodisch verändert wird, vorzugsweise mindestens ein Positioniermittel (15, 16, 17, 18) in Herstellungsrichtung (13) und gegen die Herstellungsrichtung (13) periodisch hin- und herbewegt wird.

3. Verfahren nach Anspruch 1 oder 2, **dadurch gekennzeichnet, dass** die Positioniermitter (15, 16, 17, 18) die Verstärkung (11) umgeben und der Umfang bzw. der Querschnitt der Verstärkung (11) von den Positioniermitteln (15, 16, 17, 18) in Herstellungsrichtung vorzugsweise stufenweise verringert wird.

4. Verfahren nach einem der vorhergehenden Ansprüche, **dadurch gekennzeichnet, dass** die Verstärkung (11) beim Hindurchziehen mindestens durch die Positioniermittel (15, 16, 17, 18) stramm gehalten wird, vorzugsweise das Strammhalten der Verstärkung (11) zwischen dem in Herstellungsrichtung (13) ersten Positioniermittel (15) und der Zieheinrichtung (24) erfolgt.

5. Verfahren nach einem der vorhergehenden Ansprüche, **dadurch gekennzeichnet, dass** das Kunststoffprofil (10, 33) in der Zieheinrichtung (24) gekühlt und/oder radial zusammengepresst bzw. kalibriert wird.

6. Verfahren nach einem der vorhergehenden Ansprüche, **dadurch gekennzeichnet, dass** die Zieheinrichtung (24) vom Umfang des Kunststoffprofils (10, 33) lösbar ist, vorzugsweise durch Teilen der Zieheinrichtung (24).

7. Verfahren nach einem der vorhergehenden Ansprüche, **dadurch gekennzeichnet, dass** mindestens ein Positioniermittel (15, 16, 17, 18), eine Tränkeeinrichtung (25) die Form (23, 32) und/oder die Zieheinrichtung (24) periodisch hin- und herbewegbar sind, vorzugsweise phasenversetzt bzw. phasenverschoben.

8. Verfahren nach einem oder mehreren der Ansprüche 1 bis 7, **dadurch gekennzeichnet, dass** die Form (32) aus mehreren in Herstellungsrichtung (13) aufeinanderfolgenden Formabschnitten (34) mit jeweils einem zum Querschnitt des herzustellenden Kunststoffprofils (10, 33) korrespondierenden Formgebungsdurchlass (35) gebildet wird, wobei die Formabschnitte (34) zur Erzielung eines gewünschten Verlaufs des Kunststoffprofils (10, 33) so verlagert werden, dass die Längsrichtungen (36) der Formgebungsdurchlässe (35) auf der Längsmittelachse des herzustellenden Kunststoffprofils (10) liegen und/oder tangential zur Längsmittelachse (37) des herzustellenden Kunststoffprofils (33) verlaufen.

9. Verfahren nach Anspruch 8, **dadurch gekennzeichnet, dass** die Formabschnitte (34) derart verlagert werden, dass sich die Neigungen der Längsrichtungen (36) der Formgebungsdurchlässe (35) ändern und/oder die Formabschnitte (34) derart verlagert werden, dass bei plattenartigen Formabschnitten (34) in der Plattenmitte liegende Stellen der Formgebungsdurchlässe (35) auf der Längsmittelachse (37) jedes herzustellenden Kunststoffprofils (10, 33) liegen.

10. Vorrichtung zur Herstellung eines eine Verstärkung (11) aufweisenden Kunststoffprofils (10, 33), mit einer das Kunststoffprofil (10, 33) vollständig umgebenden, geschlossenen Form (23, 32) und mindestens einer in Herstellungsrichtung (13) des Kunststoffprofils (10, 33) vor der Form (23, 32) angeordneten Positioniereinrichtung (14), für die Verstärkung (11) des Kunststoffprofils (10, 33), wobei die Positioniereinrichtung (14) mehrere aufeinanderfolgende Positioniermittel (15, 16, 17, 18) aufweist, **dadurch gekennzeichnet, dass** mindestens ein Positioniermittel (15, 16, 17, 18) relativ zu wenigstens einem anderen Positioniermittel (15, 16, 17, 18) hin- und herbewegbar ist.

11. Vorrichtung nach Anspruch 10, **dadurch gekennzeichnet, dass** jedes Positioniermittel (15, 16, 17, 18) blendenartig ausgebildet ist und/oder jedes Positioniermittel (15, 16, 17, 18) einen Durchlass (28, 29, 30, 31) für die Verstärkung (11) aufweist und die Durchlässe (28, 29, 30, 31) in den in Herstellungsrichtung (13) aufeinanderfolgenden Positioniermitteln (15, 16, 17, 18) in Herstellungsrichtung (13) kleiner werden.

12. Vorrichtung nach Anspruch 10 oder 11, **dadurch gekennzeichnet, dass** das hin- und herbewegbare Positioniermittel (15, 16, 17, 18) unabhängig vom anderen Positioniermittel (15, 16, 17, 18) periodisch bewegbar ist, vorzugsweise durch einen eigenen Antrieb bzw. Altanator.

13. Vorrichtung nach einem der Ansprüche 10 bis 12, **dadurch gekennzeichnet, dass** in Herstellungsrichtung (13) auf die Form (23, 32) mindestens eine periodisch hin- und herbewegbare Zieheinrichtung (24) folgt, wobei die Zieheinrichtung (24) vorzugsweise eine Kühlung aufweist und/oder aus mehreren zusammen- und auseinanderfahrbaren Greiferteilen besteht, die das herzustellende Kunststoffprofil (10, 33) im zusammengepressten Zustand vollständig umgreifen.

14. Vorrichtung nach einem oder mehreren der Ansprüche 10 bis 13, **dadurch gekennzeichnet, dass** die Form (32) aus mehreren in Herstellungsrichtung (13) aufeinanderfolgenden Formabschnitten (34) mit zum Querschnitt des herzustellenden Kunststoffprofils (10, 33) korrespondierenden Formgebungsdurchlässen (35) gebildet ist und die Größe jedes Formgebungsdurchlasses (35) sich in Längsrichtung (36) desselben bzw. in Herstellungsrichtung (13) des Kunststoffprofils (10, 33) ändert.

15. Vorrichtung nach Anspruch 14, **dadurch gekennzeichnet, dass** die Formabschnitte (34) als Formplatten ausgebildet sind, wobei die sich quer durch die Formplatten erstreckenden Formgebungsdurchlässe (35) etwa in der Mitte der jeweiligen Formplatte am kleinsten sind und sich zu gegenüberliegenden Hauptflächen der Formgebungsplatten zunehmend vergrößern und/oder die Formabschnitte (34) verkippbar sind, indem die Längsrichtung (36) des Formgebungsdurchlasses (35) im jeweiligen Formabschnitt (34), insbesondere der jeweiligen Formplatte, vorzugsweise in ihrer Neigung veränderbar ist.

## Claims

1. A method for producing a plastic profile (10, 33) having a reinforcement (11), the reinforcement (11) being passed uninterruptedly through a positioning device (14) and a mold (23, 32) then following in the direction of production (13), and the plastic profile (10, 33) with the reinforcement (11) embedded therein being pulled by a pulling device (24) through the positioning device (14) and the mold (23, 32) in the direction of production (13), wherein the reinforcement (11) is pulled through a positioning device (14) with at least two successive, separate positioning means (15, 16, 17, 18), **characterized in that** at least one positioning means (15, 16, 17, 18) is thereby moved in relation to at least one other.

2. The method as claimed in claim 1, **characterized in that** the distance between at least two positioning means (15, 16, 17, 18) following one another in the direction of production (13) is periodically changed, preferably that at least one positioning means (15, 16, 17, 18) is periodically moved back and forth in the direction of production (13) and counter to the direction of production (13).

3. The method as claimed in claim 1 or 2, **characterized in that** the positioning means (15, 16, 17, 18) surround the reinforcement (11) and the circumference or the cross section of the reinforcement (11) is reduced, preferably stage by stage, by the positioning means (15, 16, 17, 18) in the direction of production.

4. The method as claimed in one of the preceding claims, **characterized in that** the reinforcement (11) is kept taut as it is pulled through at least the positioning means (15, 16, 17, 18), the keeping taut of the reinforcement (11) preferably taking place between the first positioning means (15) in the direction of production (13) and the pulling device (24).

5. The method as claimed in one of the preceding claims, **characterized in that** the plastic profile (10, 33) is cooled and/or radially pressed together or calibrated in the pulling device (24).

6. The method as claimed in one of the preceding claims, **characterized in that** the pulling device (24) can be released from the circumference of the plastic profile (10, 33), preferably by dividing the pulling device (24).

7. The method as claimed in one of the preceding claims, **characterized in that** at least one positioning means (15, 16, 17, 18), an impregnating device (25), the mold (23, 32) and/or the pulling device (24) can be periodically moved back and forth, preferably in a phase-offset or phase-shifted manner.

8. The method as claimed in one or more of the claims 1 to 7, **characterized in that** the mold (32) is formed by multiple mold portions (34) following one another in the direction of production (13) and respectively having a molding passage (35) corresponding to the cross section of the plastic profile (10, 33) to be produced, the mold portions (34) being displaced such that the longitudinal directions (36) of the molding passages (35) lie on the longitudinal center axis of the plastic profile (10) to be produced and/or run tangentially with respect to the longitudinal center axis (37) of the plastic profile (33) to be produced to achieve a desired shape of the plastic profile (10, 33).

9. The method as claimed in claim 8, **characterized in that** the mold portions (34) are displaced in such a way that the inclinations of the longitudinal directions (36) of the molding passages (35) change and/or the mold portions (34) are displaced in such a way that, in the case of plate-like mold portions (34), points of the molding passages (35) that lie in the center of the plate lie on the longitudinal center axis (37) of each plastic profile (10, 33) to be produced.

10. An apparatus for producing a plastic profile (10, 33) having a reinforcement (11), with a closed mold (23, 32), completely surrounding the plastic profile (10, 33), and at least one positioning device (14), for the reinforcement (11) of the plastic profile (10, 33), arranged upstream of the mold (23, 32) in the direction of production (13) of the plastic profile (10, 33), wherein the positioning device (14) has multiple successive positioning means (15, 16, 17, 18), **characterized in that** at least one positioning means (15, 16, 17, 18) is movable back and forth in relation to at least one other positioning means (15, 16, 17, 18).

11. The apparatus as claimed in claim 10, **characterized in that** each positioning means (15, 16, 17, 18) is formed like an orifice plate and/or each positioning means (15, 16, 17, 18) has a passage (28, 29, 30, 31) for the reinforcement (11) and the passages (28, 29, 30, 31) in the positioning means (15, 16, 17, 18) following one another in the direction of production (13) become smaller in the direction of production (13).

12. The apparatus as claimed in claim 10 or 11, **characterized in that** the positioning means (15, 16, 17, 18) that can be moved back and forth can be periodically moved independently of the other positioning means (15, 16, 17, 18), preferably by a drive or actuator of its own.

13. The apparatus as claimed in one of claims 10 to 12, **characterized in that** at least one pulling device (24) that can be periodically moved back and forth follows the mold (23, 32) in the direction of production (13), the pulling device (24) preferably having a cooling arrangement and/or consisting of multiple gripper parts that can be moved together and apart and in the pressed-together state completely grip around the plastic profile (10, 33) to be produced.

14. The apparatus as claimed in one or more of claims 10 to 13, **characterized in that** the mold (32) is formed by multiple mold portions (34) following one another in the direction of production (13) and having molding passages (35) corresponding to the cross section of the plastic profile (10, 33) to be produced, and the size of each molding passage (35) changes in the longitudinal direction (36) of the same or in the direction of production (13) of the plastic profile (10, 33).

15. The apparatus as claimed in claim 14, **characterized in that** the mold portions (34) are formed as mold plates, the molding passages (35) that extend transversely through the mold plates being smallest approximately in the center of the respective mold plate and increasing in size increasingly toward opposing main surfaces of the molding plates and/or the mold portions (34) can be tilted, by the longitudinal direction (36) of the molding passage (35) in the respective mold portion (34), in particular of the respective mold plate, preferably being variable in its inclination.

## Revendications

1. Procédé de fabrication d'un profilé en matière plastique (10, 33) comprenant un élément de renforcement (11), dans lequel on guide l'élément de renforcement (11) en continu à travers un dispositif de positionnement (14) et un moule (23, 32) qui le suit dans la direction de fabrication (13) et on tire le profilé en matière plastique (10, 33) avec l'élément de renforcement (11) noyé dans celui-ci au moyen d'un dispositif de traction (24) dans la direction de fabrication (13) à travers le dispositif de positionnement (14) et le moule (23, 32), dans lequel on tire l'élément de renforcement (11) à travers un dispositif de positionnement (14) avec au moins deux moyens de positionnement séparés (15, 16, 17, 18) qui se succèdent, **caractérisé en ce que** l'on déplace au moins un moyen de positionnement (15, 16, 17, 18) par rapport à au moins un autre.

2. Procédé selon la revendication 1, **caractérisé en ce que** l'on change périodiquement la distance entre au moins deux moyens de positionnement (15, 16, 17, 18) qui se succèdent dans la direction de fabrication (13), de préférence on déplace périodiquement en va et vient au moins un moyen de positionnement (15, 16, 17, 18) dans la direction de fabrication (13) et à l'opposé de la direction de fabrication (13).

3. Procédé selon la revendication 1 ou 2, **caractérisé en ce que** les moyens de positionnement (15, 16, 17, 18) entourent l'élément de renforcement (11) et on réduit de préférence par étapes la périphérie ou la section transversale de l'élément de renforcement (11) dans la direction de fabrication au moyen des moyens de positionnement (15, 16, 17, 18).

4. Procédé selon l'une quelconque des revendications précédentes, **caractérisé en ce que** l'on maintient l'élément de renforcement (11) de façon tendue lors de la traction au moins à travers les moyens de positionnement (15, 16, 17, 18), de préférence le maintien rigide de l'élément de renforcement (11) est effectué entre le premier moyen de positionnement (15) dans la direction de fabrication (13) et le dispositif de traction (24).

5. Procédé selon l'une quelconque des revendications précédentes, **caractérisé en ce que** l'on refroidit le profilé en matière plastique (10, 33) et/ou on le comprime radialement ou on le calibre dans le dispositif de traction (24).

6. Procédé selon l'une quelconque des revendications précédentes, **caractérisé en ce que** le dispositif de traction (24) est séparable de la périphérie du profilé en matière plastique (10, 33), de préférence en séparant le dispositif de traction (24).

7. Procédé selon l'une quelconque des revendications précédentes, **caractérisé en ce qu'**au moins un moyen de positionnement (15, 16, 17, 18), un dispositif d'imprégnation (25), le moule (23, 32) et/ou le dispositif de traction (24) sont déplaçables périodiquement en va et vient, de préférence en décalage de phase ou en opposition de phase.

8. Procédé selon l'une quelconque des revendications 1 à 7, **caractérisé en ce que** l'on forme le moule (32) en plusieurs parties de moule (34) qui se succèdent dans la direction de fabrication (13) avec chaque fois un passage de formage (35) correspondant à la section transversale du profilé en matière plastique à fabriquer (10, 33), dans lequel on déplace les parties de moule (34) pour la production d'une allure désirée du profilé en matière plastique (10, 33), de telle manière que les directions longitudinales (36) des passages de formage (35) se trouvent sur l'axe central longitudinal du profilé en matière plastique à fabriquer (10) et/ou s'étendent tangentiellement à l'axe central longitudinal (37) du profilé en matière plastique à fabriquer (33).

9. Procédé selon la revendication 8, **caractérisé en ce que** l'on déplace les parties de moule (34) de telle manière que les inclinaisons des directions longitudinales (36) des passages de formage (35) varient et/ou on déplace les parties de moule (34) de telle manière que, dans le cas de parties de moule plates (34), des points des passages de formage (35) situés au milieu de la plaque se trouvent sur l'axe central longitudinal (37) de chaque profilé en matière plastique à fabriquer (10, 33).

10. Dispositif de fabrication d'un profilé en matière plastique (10, 33) comprenant un élément de renforcement (11), avec un moule fermé (23, 32) entourant entièrement le profilé en matière plastique (10, 33) et au moins un dispositif de positionnement (14) disposé avant le moule (23, 32) dans la direction de fabrication (13) du profilé en matière plastique (10, 33) pour l'élément de renforcement (11) du profilé en matière plastique (10, 33), dans lequel le dispositif de positionnement (14) présente plusieurs moyens de positionnement (15, 16, 17, 18) qui se succèdent, **caractérisé en ce qu'**au moins un moyen de positionnement (15, 16, 17, 18) est déplaçable en va et vient par rapport à au moins un autre moyen de positionnement (15, 16, 17, 18).

11. Dispositif selon la revendication 10, **caractérisé en ce que** chaque moyen de positionnement (15, 16, 17, 18) est réalisé en forme d'écran et/ou chaque moyen de positionnement (15, 16, 17, 18) présente un passage (28, 29, 30, 31) pour l'élément de renforcement (11) et les passages (28, 29, 30, 31) dans les moyens de positionnement (15, 16, 17, 18) qui se succèdent dans la direction de fabrication (13) deviennent plus petits dans la direction de fabrication (13).

12. Dispositif selon la revendication 10 ou 11, **caractérisé en ce que** le moyen de positionnement (15, 16, 17, 18) déplaçable en va et vient est déplaçable périodiquement indépendamment de l'autre moyen de positionnement (15, 16, 17, 18), de préférence au moyen d'un entraînement propre ou d'un altanator.

13. Dispositif selon l'une quelconque des revendications 10 à 12, **caractérisé en ce qu'**au moins un dispositif de traction (24) déplaçable périodiquement en va et vient suit le moule (23, 32) dans la direction de fabrication (13), dans lequel le dispositif de traction (24) présente de préférence un refroidissement et/ou se compose de plusieurs parties de saisie pouvant se rapprocher et s'écarter l'une de l'autre, qui entourent entièrement dans l'état serré le profilé en matière plastique à fabriquer (10, 33).

14. Dispositif selon une ou plusieurs des revendications 10 à 13, **caractérisé en ce que** le moule (32) est formé de plusieurs parties de moule (34) qui se succèdent dans la direction de fabrication (13) avec des passages de formage (35) correspondants à la section transversale du profilé en matière plastique à fabriquer (10, 33) et la grandeur de chaque passage de formage (35) varie dans la direction longitudinale (36) de celui-ci ou dans la direction de fabrication (13) du profilé en matière plastique (10, 33).

15. Dispositif selon la revendication 14, **caractérisé en ce que** les parties de moule (34) sont réalisées en forme de plaques de moule, dans lequel les passages de formage (35) s'étendant transversalement à travers les plaques de moule sont le plus petits environ au milieu de la plaque de moule respective et grandissent de façon croissante en direction des faces principales opposées des plaques de formage et/ou les parties de moule (34) sont inclinables, du fait que la direction longitudinale (36) du passage de formage (35) est variable dans la partie de moule respective (34), en particulier de la plaque de moule respective, de préférence en ce qui concerne son inclinaison.
